# EUROPEAN PATENT APPLICATION

(11) **EP 1 916 401 A1**
(43) Date of publication of application: **30.04.2008**
(21) Application number: 06782547.1
(22) Date of filing: 09.08.2006
(51) Int. Cl.: F02D 13/02, F02D 21/08, F02M 25/07

(54) **EXHAUST GAS RECIRCULATION DEVICE FOR ENGINE**

(30) Priority: 17.08.2005 JP 2005236230
(71) Applicant: Hino Motors, Ltd., Hino-shi, Tokyo 191-8660 (JP)
(72) Inventor: SHIMODA, Masatoshi, Hino-shi, Tokyo 1918660 (JP)
(74) Representative: Banzer, Hans-Jörg
(86) International application number: PCT/JP2006/315731
(87) International publication number: WO 2007/020846

(57) **Abstract**

There is provided an exhaust gas recirculation device for an engine, which is capable of reducing the emission of NOx and preventing engine overheat when an engine is operated at low to normal high loads. An intake passage (15) for supplying air to a cylinder of an engine (12) is connected to an intake port (14) of the engine, and an exhaust passage (17) for discharging exhaust gas in the cylinder into the atmosphere is connected to an exhaust port (16) of the cylinder. An external EGR device (21) has an EGR passage (21a) one end of which is connected to the exhaust passage and the other end of which is connected to the intake passage and an EGR valve (21b) capable of opening and closing the EGR passage, and an internal EGR device introduces exhaust gas into the cylinder through the exhaust passage by opening an exhaust valve for opening and closing the exhaust port at the time of intake stroke of the cylinder. An EGR cooler (21c) for cooling exhaust gas by using cooling water of the engine is provided in the EGR passage. A controller controls the external EGR device based on the detection output of a temperature sensor (45).

## Description

### TECHNICAL FIELD

The present invention relates to a device for recirculate some of exhaust gas of an engine by returning it to the air intake system of the engine.

### BACKGROUND ART

Conventionally, as a device of this type, an exhaust gas recirculation device for an turbosupercharged engine has been disclosed in which an intake passage for supplying air to a cylinder via a compressor housing is connected to an intake port, an exhaust passage for discharging exhaust gas in the cylinder into the atmosphere via a turbine housing is connected to an exhaust port, and an EGR valve capable of regulating the flow rate of exhaust gas returning to the intake passage is provided in an EGR passage connecting the exhaust passage and the intake passage to each other (for example, refer to Patent Document 1). In this exhaust gas recirculation device, an external EGR device comprises the EGR passage and the EGR valve. Also, the configuration is such that an internal EGR device for introducing exhaust gas into the cylinder through the exhaust passage by opening an exhaust valve at the time of intake stroke of cylinder is provided in the engine, and a controller controls the EGR valve based on the detection outputs of a rotation sensor and a load sensor. In the EGR passage, an EGR cooler through which cooling water of the engine passes is provided to cool exhaust gas flowing in this passage.

In the exhaust gas recirculation device for an turbosupercharged engine configured as described above, when the engine is operated at low to medium loads, the exhaust gas in the exhaust passage is returned into the cylinder through an EGR pipe by the operation of the external EGR device, and also the exhaust gas is caused to flow directly into the cylinder through the exhaust port by the operation of the internal EGR device. As a result, the highest combustion temperature of an air-fuel mixture in the cylinder is decreased by the heat capacity that the exhaust gas (inert gas) has and by the decrease in oxygen concentration in intake air, so that the emission of NOx can be reduced. On the other hand, when the engine is operated at medium to high loads, the return of exhaust gas in the exhaust passage into the cylinder through the EGR pipe is stopped by making the external EGR device inoperable, and the exhaust gas in the exhaust passage is caused to flow directly into the cylinder through the exhaust port. As a result, the highest combustion temperature of the air-fuel mixture in the cylinder is decreased by the heat capacity that the exhaust gas (inert gas) flowing into the cylinder has and by the decrease in oxygen concentration in intake air, so that the emission of NOx can be reduced, and also a shortage of air in the cylinder is solved and the discharge of black smoke from the engine can be reduced. Therefore, in all engine operation regions of not only the operation at low to medium loads but also the operation at medium to high loads, NOx in exhaust gas can be decreased by returning exhaust gas into the cylinder without pressurizing the EGR gas.

Patent Document 1: Japanese Unexamined Patent Application Publication No. 2001-107810 (claim 1, paragraph [0023])

### DISCLOSURE OF THE INVENTION

### PROBLEMS TO BE SOLVED BY THE INVENTION

However, in the conventional exhaust gas recirculation device for an turbosupercharged engine described in Patent Document 1, when the engine is operated at medium to high loads, the external EGR device is made inoperable, and only the internal EGR device is operated, so that there arises a problem in that the emission of NOx increases especially when the engine is operated at high loads. If not only the internal EGR device but also the external EGR device is operated to solve the above-described problem when the engine is operated at high loads, heat exchange with exhaust gas takes place in an EGR cooler, and therefore the cooling water of engine is heated. Therefore, the cooling capacity of engine due to the cooling water decreases, and there is a fear of engine overheat.

An object of the present invention is to provide an exhaust gas recirculation device for an engine, which is capable of reducing the emission of NOx and preventing engine overheat when an engine is operated at low to normal high loads. In this description, the engine operation at normal high loads includes a high-load operation such as sudden take-off or sudden acceleration on the level ground or high-speed operation on the level ground, but excludes a high-load operation harsh to the engine such as hill climbing for a long period of time.

### MEANS FOR SOLVING THE PROBLEMS

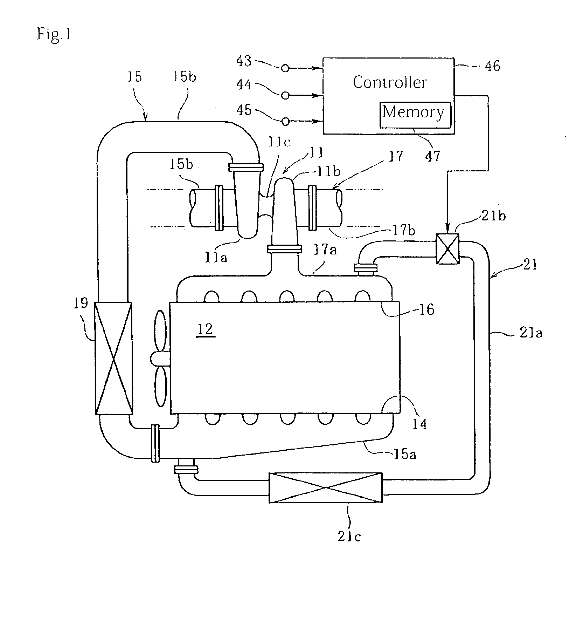

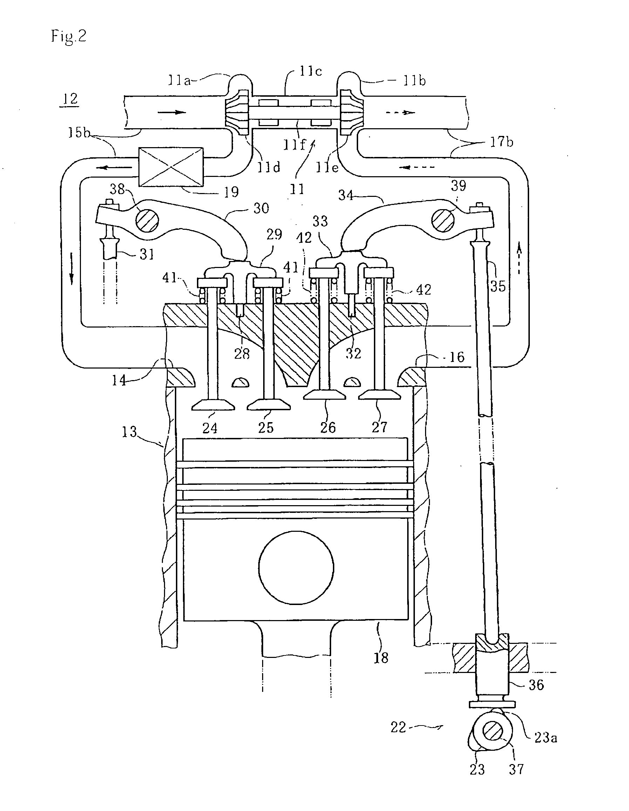

The invention according to claim 1 provides an exhaust gas recirculation device for an engine, including, as shown in Figures 1 and 2, an intake passage 15 which is connected to an intake port 14 of an engine 12 to supply air to a cylinder 13 of the engine 12; an exhaust passage 17 which is connected to an exhaust port 16 of the cylinder 13 to discharge exhaust gas in the cylinder 13 into the atmosphere; an external EGR device 21 which regulates the flow rate of exhaust gas returned to the intake passage 15 from the exhaust passage 17 through an EGR passage 21a, one end of which is connected to the exhaust passage 17 and the other end of which is connected to the intake passage 15, by providing an EGR valve 21b for opening and closing the EGR passage 21a in the EGR passage 21a; an internal EGR device 22 which introduces exhaust gas from the exhaust passage 17 into the cylinder 13 by opening an exhaust valve 26, 27 for opening and closing the exhaust port 16 at the time of intake stroke of the cylinder 13; an EGR cooler 21c which is provided in the EGR passage 21a to cool exhaust gas flowing in the EGR passage 21a by using cooling water of the engine 13; a temperature sensor 45 for detecting the temperature of cooling water of the engine 13; and a controller 46 for controlling the external EGR device 21 or the external EGR device 21 and the internal EGR device 22, 62 based on the detection output of the temperature sensor 45.

In the exhaust gas recirculation device for an engine described in claim 1, when the temperature of cooling water detected by the temperature sensor 45 is not higher than a predetermined temperature, the controller 46 controls the external EGR device 21 to open the EGR valve 21b, or controls the external EGR device 21 to open the EGR valve 21b and also controls the internal EGR device to open or close the exhaust port at the time of intake stroke of the cylinder. Thereby, the exhaust gas in the exhaust passage 17 is returned into the cylinder 13 after passing through the EGR passage 21a, and also the exhaust gas is caused to flow directly into the cylinder 13 through the exhaust port 16. Alternatively, although the exhaust gas in the exhaust passage is returned into the cylinder after passing through the EGR passage, the exhaust gas does not flow directly into the cylinder through the exhaust port. On the other hand, when the temperature of cooling water detected by the temperature sensor 45 exceeds the predetermined temperature, the controller 46 controls the external EGR device 21 to close the EGR valve 21b, or controls the external EGR device to close the EGR valve and also controls the internal EGR device to open the exhaust port at the time of intake stroke of the cylinder. Thereby, although the exhaust gas in the exhaust passage 17 is not returned into the cylinder 13 after passing through the EGR passage 21a, the exhaust gas is caused to flow directly into the cylinder 13 through the exhaust port 16.

The invention according to claim 2 provides the exhaust gas recirculation device for an engine of the invention according to claim 1, wherein, further as shown in Figures 1 and 2, the internal EGR device 22 is an EGR protrusion 23a formed at a position, at which the exhaust valve 26, 27 is opened at the time of intake stroke of the cylinder 13, on the outer peripheral surface of an exhaust cam 23; and the controller 46 carries out control so that when the temperature of cooling water detected by the temperature sensor 45 is not higher than a predetermined temperature, the external EGR device 21 is controlled to open the EGR valve 21b, and when the temperature of cooling water exceeds the predetermined temperature, the external EGR device 21 is controlled to close the EGR valve 21b.

In the exhaust gas recirculation device for an engine described in claim 2, the internal EGR 22 operates regardless of the operation state of the engine 12, and when the temperature of cooling water detected by the temperature sensor 45 is not higher than the predetermined temperature, the controller 46 controls the external EGR device 21 to open the EGR valve 21b. Therefore, the exhaust gas in the exhaust passage 17 is returned into the cylinder 13 after passing through the EGR passage 21a, and also the exhaust gas flows directly into the cylinder 13 through the exhaust port 16. On the other hand, when the temperature of cooling water detected by the temperature sensor 45 exceeds the predetermined temperature, the controller 46 controls the external EGR device 21 to close the EGR valve 21b. Therefore, although the exhaust gas in the exhaust passage 17 is not returned into the cylinder 13 after passing through the EGR passage 21a, the exhaust gas flows directly into the cylinder 13 through the exhaust port 16.

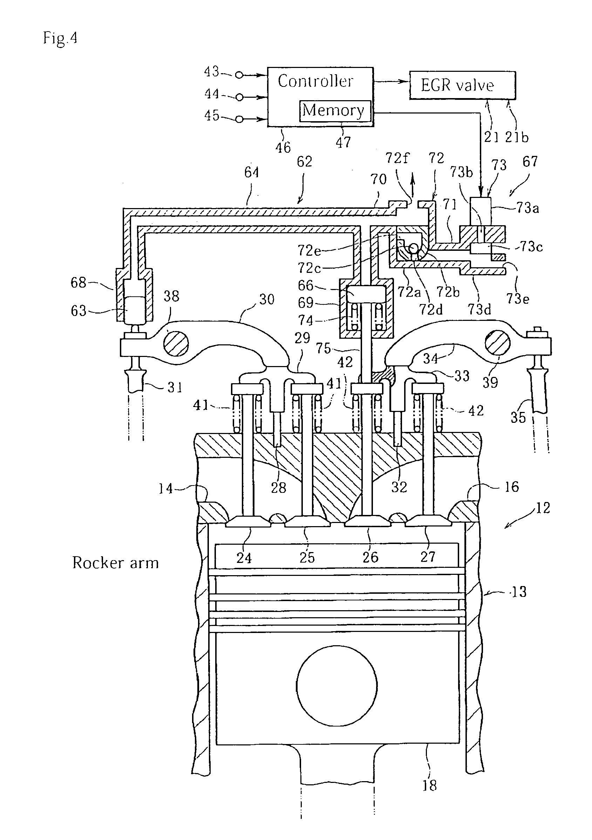

The invention according to claim 3 provides the exhaust gas recirculation device for an engine of the invention according to claim 1, wherein, further as shown in Figure 4, the internal EGR device 62 has a master piston 63 which is operated by an intake rocker arm 30 for opening an intake valve 24, 25 at the time of intake stroke of the cylinder 13, a slave piston 66 which is connected to the master piston 63 via an oil passage 64 and opens the exhaust valve 26, 27 of the cylinder 13 by means of oil pressure produced by the operation of the master piston 63, and an oil pressure changeover means 67 for changing over the holding and releasing of oil pressure in the oil passage 64, and the controller 46 carries out control so that when the temperature of cooling water detected by the temperature sensor 45 is not higher than a predetermined temperature, the external EGR device 21 is controlled to open the EGR valve 21b, and the internal EGR device 62 is controlled to open or close the exhaust port 16 at the time of intake stroke of the cylinder 13; and when the temperature of cooling water exceeds the predetermined temperature, the external EGR device 21 is controlled to close the EGR valve 21b, and the internal EGR device 62 is controlled to open the exhaust port 16 at the time of intake stroke of the cylinder 13.

In the exhaust gas recirculation device for an engine described in claim 3, when the temperature of cooling water detected by the temperature sensor 45 is not higher than the predetermined temperature, the controller 46 controls the external EGR device 21 to open the EGR valve 21b and also controls the internal EGR device 62 to open or close the exhaust port 16 at the time of intake stroke of the cylinder 13. Therefore, the exhaust gas in the exhaust passage 17 is returned into the cylinder 13 after passing through the EGR passage, and also the exhaust gas flows directly into the cylinder 13 through the exhaust port 16. On the other hand, when the temperature of cooling water detected by the temperature sensor 45 exceeds the predetermined temperature, the controller 46 controls the external EGR device 21 to close the EGR valve 21b and also controls the internal EGR device 62 to open the exhaust port 16 at the time of intake stroke of the cylinder 13. Therefore, although the exhaust gas in the exhaust passage is not returned into the cylinder 13 after passing through the EGR passage, the exhaust gas flows directly into the cylinder 13 through the exhaust port 16.

### EFFECT OF THE INVENTION

As described above, according to the present invention, the external EGR device is configured so that the EGR valve provided in the EGR passage regulates the flow rate of exhaust gas returned to the intake passage, the internal EGR device is configured so that the exhaust valve is opened at the time of intake stroke of the cylinder to introduce exhaust gas into the cylinder through the exhaust passage, the temperature of cooling water of the engine is detected by the temperature sensor, and the controller controls the external EGR device or the external EGR device and the internal EGR device based on the detection output of the temperature sensor. Therefore, when the temperature of cooling water detected by the temperature sensor is not higher than the predetermined temperature, the controller controls the external EGR device to open the EGR valve, or controls the external EGR device to open the EGR valve and also controls the internal EGR device to open or close the exhaust port at the time of intake stroke of the cylinder. As a result, the highest combustion temperature of an air-fuel mixture in the cylinder is decreased by the heat capacity that the exhaust gas, which is returned into the cylinder by the external EGR device or the external EGR device and the internal EGR device, has and by the decrease in oxygen concentration in intake air, so that the emission of NOx can be reduced. On the other hand, when the temperature of cooling water detected by the temperature sensor exceeds the predetermined temperature, the controller controls the external EGR device to close the EGR valve, or controls the external EGR device to close the EGR valve and also controls the internal EGR device to open the exhaust port at the time of intake stroke of the cylinder. As a result, the exhaust gas is returned into the cylinder by the internal EGR device only. Therefore, although the quantity of exhaust gas returned into the cylinder decreases, and the NOx decreasing efficiency lowers slightly, since the cooling water of the engine is not heat-exchanged with high-temperature exhaust gas in the EGR cooler, the rise in temperature of cooling water of the engine can be restrained, and thereby the engine can be prevented from overheating.

Also, if the internal EGR device is the EGR protrusion formed at a position, at which the exhaust valve is opened at the time of intake stroke of the cylinder, on the outer peripheral surface of the exhaust cam, the internal EGR operates regardless of the operation state of the engine, and when the temperature of cooling water detected by the temperature sensor is not higher than the predetermined temperature, the controller controls the external EGR device to open the EGR valve. Therefore, the exhaust gas in the exhaust passage is returned into the cylinder after passing through the EGR passage, and also the exhaust gas flows directly into the cylinder through the exhaust port. As a result, an effect that is the same as described above can be achieved. On the other hand, when the temperature of cooling water detected by the temperature sensor exceeds the predetermined temperature, the controller controls the external EGR device to close the EGR valve. Therefore, although the exhaust gas in the exhaust passage is not returned into the cylinder after passing through the EGR passage, the exhaust gas flows directly into the cylinder through the exhaust port. As a result, an effect that is the same as described above can be achieved.

Further, if the internal EGR device has the master piston which is operated by the intake rocker arm for opening the intake valve at the time of intake stroke of the cylinder, the slave piston which opens the exhaust valve of the cylinder by means of oil pressure produced by the operation of the master piston, and the oil pressure changeover means for changing over the holding and releasing of oil pressure in the oil passage, when the temperature of cooling water detected by the temperature sensor is not higher than the predetermined temperature, the controller controls the external EGR device to open the EGR valve, and also controls the internal EGR device to open or close the exhaust port at the time of intake stroke of the cylinder. Therefore, the exhaust gas in the exhaust passage is returned into the cylinder after passing through the EGR passage, and also the exhaust gas flows directly into the cylinder through the exhaust port. As a result, an effect that is the same as described above can be achieved. On the other hand, when the temperature of cooling water detected by the temperature sensor exceeds the predetermined temperature, the controller controls the external EGR device to close the EGR valve and also controls the internal EGR device to open the exhaust port at the time of intake stroke of the cylinder. Therefore, although the exhaust gas in the exhaust passage is not returned into the cylinder after passing through the EGR passage, the exhaust gas flows directly into the cylinder through the exhaust port. As a result, an effect that is the same as described above can be achieved.

### BRIEF DESCRIPTION OF THE DRAWINGS

Figure 1 is a configuration view showing an external EGR device of an exhaust gas recirculation device for an engine in accordance with a first embodiment of the present invention;
Figure 2 is a sectional view of an essential portion of an engine including an internal EGR device of the exhaust gas recirculation device shown in Figure 1;
Figure 3 is a diagram showing the opening/closing timing of an intake valve and an exhaust valve of the engine shown in Figure 2;
Figure 4 is a sectional view corresponding to Figure 2, showing a second embodiment of the present invention;
Figure 5 is a diagram showing NOx emission for an engine equipped with an EGR device of example 1 and comparative example 1; and
Figure 6 is a diagram showing fuel consumption for an engine equipped with an EGR device of example 1 and comparative example 1.

### BEST MODES FOR CARRYING OUT THE INVENTION

The best mode for carrying out the invention will now be described by reference to the accompanying drawings.

### First embodiment

As shown in Figures 1 and 2, a vehicle is mounted with a diesel engine 12 having a turbocharger 11. To an intake port 14 of a cylinder 13 of the engine 12, an intake pipe 15b is connected via an intake passage 15, that is, an intake manifold 15a, and to an exhaust port 16 of the cylinder 13, an exhaust pipe 17b is connected via an exhaust passage 17, that is, an exhaust manifold 17a. In the cylinder 13, a piston 18 is provided so as to be movable up and down (Figure 2). The turbocharger 11 has a compressor housing 11a that is provided in the intake pipe 15a to rotatably accommodate a compressor impeller 11d, and a turbine housing 11b that is provided in the exhaust pipe 17b to rotatably accommodate a turbine impeller 11e (Figures 1 and 2). The turbine housing 11b and the compressor housing 11a are connected to each other by a connecting part 11c that rotatably holds the center of a shaft 11f, and at each end of the shaft 11f, the turbine impeller 11e and the compressor impeller 11d are fitted respectively. The stator blades of the turbine impeller 11f may be of a stationary type or a rotary type. However, a rotary-type variable displacement turbocharger is preferable because it has a higher supercharging efficiency than a stationary-type fixed displacement turbocharger. Symbol 19 in Figures 1 and 2 denotes an intercooler that is provided in the intake pipe 15b between the compressor housing 11a and the intake manifold 15a to cool intake air.

Also, the engine 12 is provided with an external EGR device 21 (Figure 1) for returning some of exhaust gas in the exhaust manifold 17a to the intake manifold 15a through an EGR pipe 21a, and an internal EGR device 22 (Figure 2) for introducing some of exhaust gas into the cylinder 13 by opening exhaust valves 26 and 27 at the time of intake stroke of the cylinder 13. As shown in detail in Figure 1, the external EGR device 21 has the EGR pipe 21a one end of which is connected to the exhaust manifold 17a and the other end of which is connected to the intake manifold 15a so as to bypass the engine 12, and an EGR valve 21b that is provided in the EGR pipe 21a and is capable of regulating the flow rate of exhaust gas returned to the intake manifold 15a from the exhaust manifold 17a through the EGR pipe 21a. Although not shown, the EGR valve 21b is an electrically operated valve for regulating the opening degree of the valve body by driving a valve element by a motor. Symbol 21c in Figure 1 denotes an EGR cooler provided in the EGR pipe 21a. The EGR cooler 21c is configured so that the exhaust gas flowing in the EGR pipe 21a is heat-exchanged with the cooling water of the engine 12, by which the exhaust gas is returned to the intake manifold 15a after being cooled.

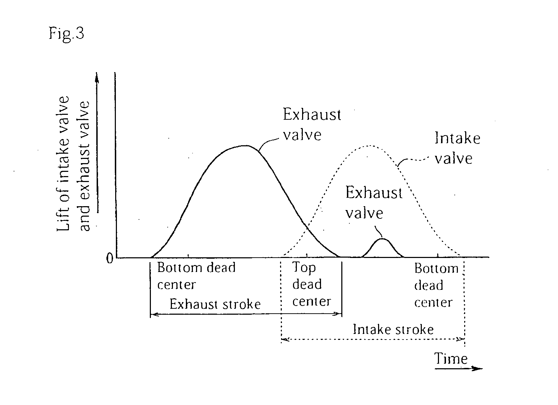

As shown in detail in Figure 2, the internal EGR device 22 is an EGR protrusion 23a formed on the outer peripheral surface of an exhaust cam 23 for opening the exhaust valves 26 and 27 of the cylinder 13. The cylinder 13 is provided with a pair of intake valves 24 and 25 and a pair of the exhaust valves 26 and 27. The intake valves 24 and 25 are opened and closed by an intake push-rod 31 via an intake bridge 29 fitted on an intake guide shaft 28 so as to be movable up and down and an intake rocker arm 30, and the exhaust valves 26 and 27 are opened and closed by an exhaust push-rod 35 via an exhaust bridge 33 fitted on an exhaust guide shaft 32 so as to be movable up and down and an exhaust rocker arm 34. With the lower end of the exhaust push-rod 35, an exhaust tappet 36 comes into contact, and with the lower end of the exhaust tappet 36, the outer peripheral surface of the exhaust cam 23 provided on an exhaust camshaft 37 that is driven by a crankshaft (not shown) comes into contact. The EGR protrusion 23a is formed at a position, at which the exhaust valves 26 and 27 are opened at the time of intake stroke of the cylinder 13, on the outer peripheral surface of the exhaust cam 23 (Figures 2 and 3). Also, the intake rocker arm 30 and the exhaust rocker arm 34 are turnably supported on an intake rocker shaft 38 and an exhaust rocker shaft 39, respectively. Symbols 41 and 42 in Figure 2 denote an intake spring (compression coil spring) and an exhaust spring (compression coil spring) for closing the intake port 14 and the exhaust port 16 by pushing up the intake valves 24 and 25 and the exhaust valves 26 and 27, respectively.

On the other hand, the engine 12 is equipped with a rotation sensor 43 for detecting the rotational speed of the crankshaft, and a load sensor 44 for detecting the depression of an accelerator pedal, that is, for detecting the load of the engine 12 (Figure 1). Also, a radiator (not shown) is equipped with a temperature sensor 45 for detecting the temperature of cooling water of the engine 12. The detection outputs of the rotation sensor 43, the load sensor 44, and the temperature sensor 45 are connected to the control inputs of a controller 46, and the control output of the controller 46 is connected to the EGR valve 21b. The controller 46 is provided with a memory 47. In this memory 47, there are stored a map for regulating the opening degree of the EGR valve 21b according to the rotational speed of the engine 12 and the load of the engine 12, and the temperature of cooling water at the time when the opening and closing of the EGR valve 21b are changed over. The temperature of the cooling water is preferably a predetermined temperature in the range of not lower than 60°C to lower than 95°C. The temperature of cooling water at the time when the opening and closing of the EGR valve 21b are changed over is a predetermined temperature in the range of not lower than 95°C to lower than 105°C. The reason why the temperature of cooling water at the time when the opening and closing of the EGR valve 21b are changed over is limited to the predetermined temperature in the range of not lower than 95°C to lower than 105°C is that the engine 12 overheats at a temperature not lower than 105°C.

The operation of the exhaust gas recirculation device for an engine configured as described above is explained.

When the engine 12 is operated at low to medium loads, and the temperature sensor 45 detects a temperature not higher than the predetermined value, the controller 46 takes in the detection outputs of the rotation sensor 43 and the load sensor 44, and compares them with the map stored in the memory 47 to regulate the opening degree of the EGR valve 21b to a predetermined opening degree (for example, 5 to 100% of full open). The flow rate of exhaust gas discharged from the cylinder 13 at this time is low, and the rotational speed of the turbine impeller 11f of the turbocharger 11 is low, so that the boost pressure of intake air due to the turbocharger 11 is low. Therefore, the exhaust gas in the exhaust manifold 17a flows into the cylinder 13 of the engine 12 after passing through the EGR pipe 21a and the intake manifold 15a. On the other hand, at the time of intake stroke of the cylinder 13, the exhaust push-rod 35 is pushed up via the exhaust tappet 36 by the EGR protrusion 23a provided on the exhaust cam 23, so that the exhaust rocker arm 34 pushes down the exhaust valves 26 and 27 via the exhaust bridge 33. Therefore, the exhaust valves 26 and 27 are opened, and the exhaust gas in the exhaust manifold 17a flows into the cylinder 13. As a result, the highest combustion temperature of an air-fuel mixture in the cylinder 13 is decreased by the heat capacity that the exhaust gas, which is returned into the cylinder 13 by the external EGR device 21 and the internal EGR device 22, has and by the decrease in oxygen concentration in intake air, so that the emission of NOx can be reduced.

Also, when the engine 12 is operated at medium to normal high loads, and the temperature sensor 45 detects a temperature not higher than the predetermined value, the controller 46 takes in the detection outputs of the rotation sensor 43 and the load sensor 44, and compares them with the map stored in the memory 47 to regulate the opening degree of the EGR valve 21b to a predetermined opening degree (for example, 5 to 100% of full open). When the engine 12 is operated at medium to high loads, the flow rate of exhaust gas discharged from the cylinder 13 to the exhaust pipe 17b is relatively high, and the rotational speed of the turbine impeller 11f of the turbocharger 11 is also relatively high, so that the boost pressure of intake air due to the turbocharger 11 becomes high. Therefore, the difference between the exhaust gas pressure in the exhaust manifold 17a and the intake air pressure in the intake manifold 15a becomes small. Nevertheless, the exhaust gas in the exhaust manifold 17a flows into the cylinder 13 of the engine 12 after passing through the EGR pipe 21a and the intake manifold 15a. On the other hand, like the time of the medium to low-load operation, the exhaust valves 26 and 27 are opened by the EGR protrusion 23a at the time of intake stroke of the cylinder 13, and the exhaust gas in the exhaust manifold 17a flows into the cylinder 13. As a result, the highest combustion temperature of the air-fuel mixture in the cylinder 13 is decreased by the heat capacity that the exhaust gas, which is returned into the cylinder 13 by the external EGR device 21 and the internal EGR device 22, has and by the decrease in oxygen concentration in intake air, so that the emission of NOx can be reduced.

Further, when a high-load operation harsh to the engine 12 such as hill climbing for a long period of time is performed, and the temperature sensor 45 detects a temperature exceeding the predetermined value, the controller 46 closes the EGR valve 21b regardless of the detection outputs of the rotation sensor 43 and the load sensor 44. Here, the EGR valve 21b is closed at the time of harsh high-load operation for the following two reasons. The first reason is as described below. When the engine 12 is operated at harsh high loads, the flow rate of exhaust gas discharged from the cylinder 13 to the exhaust pipe 17b is very high, and the rotational speed of the turbine impeller 11f of the turbocharger 11 is also very high, so that the boost pressure of intake air due to the turbocharger 11 becomes very high. Therefore, the difference between the exhaust gas pressure in the exhaust manifold 17a and the intake air pressure in the intake manifold 15a becomes small, so that even if the EGR valve 21b is opened, the quantity of exhaust gas in the exhaust manifold 17a, which flows into the intake manifold 15a through the EGR pipe 21a, is small. The second reason is as described below. Although the temperature of cooling water is raised by the harsh high-load operation of the engine 12, and the quantity of exhaust gas returned to the intake manifold 15a is small, the cooling water is heat-exchanged with the exhaust gas in the EGR cooler 21c, and thereby the temperature of cooling water is further raised, by which the engine 12 is overheated. On the other hand, even if the EGR valve 21b is closed, at the time of intake stroke of the cylinder 13, the exhaust valves 26 and 27 are opened by the EGR protrusion 23a, and therefore the exhaust gas in the exhaust manifold 17a flows into the cylinder 13. As a result, the highest combustion temperature of the air-fuel mixture in the cylinder 13 is decreased by the heat capacity that the exhaust gas, which is returned into the cylinder 13 by the internal EGR device 22, has and by the decrease in oxygen concentration in intake air, so that the emission of NOx can be reduced though the NOx decreasing efficiency lowers slightly. Also, as compared with the case where NOx is decreased by increasing the EGR rate using the external EGR device 21 only, by using the external EGR device 21 and the internal EGR device 22 in combination, the fuel consumption can also be reduced in addition to the decrease in NOx.

### Second embodiment

Figure 4 shows a second embodiment of the present invention. In Figure 4, the same symbols are applied to elements that are the same as those in Figure 2.

In this embodiment, an internal EGR device 62 has a master piston 63 operated by the intake rocker arm 30 that opens the intake valves 24 and 25 at the time of intake stroke of the cylinder 13, a slave piston 66 that is connected to the master piston 63 via an oil passage 64 and opens the exhaust valve 26 of the cylinder 13 by means of an oil pressure produced by the operation of the master piston 63, and an oil pressure changeover means 67 for changing over the holding and releasing of oil pressure in the oil passage 64. As in the first embodiment, the cylinder 13 is provided with the paired intake valves 24 and 25 and the paired exhaust valves 26 and 27. The intake valves 24 and 25 are opened and closed by the intake push-rod 31 via the intake bridge 29 fitted on the intake guide shaft 28 so as to be movable up and down and the intake rocker arm 30, and the exhaust valves 26 and 27 are opened and closed by the exhaust push-rod 35 via the exhaust bridge 33 fitted on the exhaust guide shaft 32 so as to be movable up and down and the exhaust rocker arm 34.

The master piston 63 is slidably accommodated in a master cylinder 68 provided above the intake rocker arm 30, and the slave piston 66 is slidably accommodated in a slave cylinder 69 provided above one exhaust valve 26 of the paired exhaust valves 26 and 27. The master cylinder 68 and the slave cylinder 69 are communicatingly connected to each other by the oil passage 64. Also, the oil pressure changeover means 67 is made up of an oil supply passage 71 that connects a branch passage 70 branching from a halfway portion of the oil passage 64 and an oil pump discharge port (not shown) to each other, a solenoid valve 73 that is provided in a halfway portion of the oil supply passage 71 to allow the branch passage 70 to communicate with the oil pump discharge port or to shut off the branch passage 70 from the oil pump discharge port, and a control valve 72 provided in a connecting part between the branch passage 70 and the solenoid valve 73.

The control valve 72 has a movable case 72b that is inserted, so as to be movable up and down, in a first large-diameter passage 72a provided in a connecting part between the oil supply passage 71 and the branch passage 70 so as to extend in the vertical direction, and a nonreturn ball 72c accommodated in the movable case 72b. The lower part of the movable case 72b is formed substantially into a funnel shape, and at the lower end thereof, a through hole 72d is formed. The nonreturn ball 72c has a function of allowing the oil from an oil pump to pass through the through hole 72d and flow into the movable case 72b and inhibiting the oil in the movable case 72b from passing through the through hole 72d and being discharged. Also, in the side surface of the upper part of the movable case 72b, a hole 72e, which communicates with the branch passage 70 when the movable case 72b is pushed up, is formed. Symbol 72f in Figure 4 denotes a first oil discharge port formed at the upper end of the first large-diameter passage 72a. This discharge port 72f is configured so as to communicate with the branch passage 70 when the movable case 72b lowers.

The solenoid valve 73 has a solenoid case 73a in which a solenoid (not shown) is accommodated, a plunger 73b projecting from the case 73a, and a valve element 73c that is provided at the tip end of the plunger 73b and is movable up and down together with the plunger 73b. The valve element 73c is inserted, so as to be movable up and down, in a second large-diameter passage 73d provided in a halfway portion of the oil supply passage 71 so as to extend in the vertical direction, and the second large-diameter passage 73d is provided with a second oil discharge port 73e capable of discharging the oil in the oil supply passage 71 between the solenoid valve 73 and the control valve 72. When the solenoid valve 73 is turned on, the valve element 73c lowers, and the oil pump discharge port and the branch passage 70 are allowed to communicate with each other, by which the communication of the oil supply passage 71 between the solenoid valve 73 and the control valve 72 with the second oil discharge port 73e is cut off. Also, when the solenoid valve 73 is turned off, the valve element 73c rises, and the oil pump discharge port is shut off from the branch passage 70, by which the oil supply passage 71 between the solenoid valve 73 and the control valve 72 is allowed to communicate with the second oil discharge port 73e.

On the other hand, the slave piston 66 is brought into contact under pressure with the top surface of the slave cylinder 69 by a slave spring 74 (compression coil spring), and on the lower surface of the slave piston 66, a slave rod 75 that is in contact with one exhaust valve 26 is projectingly provided. Also, the control outputs of the controller 46 are connected to the EGR valve 21b of the external EGR device 21 and the solenoid valve 73 of the internal EGR device 62. The controller 46 is provided with the memory 47. In this memory 47, there are stored the map for regulating the opening degree of the EGR valve 21b and changing over the on and off of the solenoid valve 73 according to the rotational speed of the engine 12 and the load of the engine 12, and the temperature of cooling water of the engine 12 at the time when the opening and closing of the EGR valve 21b are changed over. The temperature of cooling water of the engine 12 at the time when the opening and closing of the EGR valve 21b are changed over is set at a temperature in the range of not lower than 95°C to lower than 105°C. On the exhaust cam, the EGR protrusion of the first embodiment is not provided. Other configurations are the same as those of the first embodiment.

The operation of the exhaust gas recirculation device for an engine configured as described above is explained.

When the engine 12 is operated at low to medium loads, and the temperature sensor 45 detects a temperature not higher than a predetermined value, the controller 46 takes in the detection outputs of the rotation sensor 43 and the load sensor 44, and compares them with the map stored in the memory 47 to regulate the opening degree of the EGR valve 21b to a predetermined opening degree (for example, 5 to 100% of full open) and to keep the solenoid valve 73 in the off state. The flow rate of exhaust gas discharged from the cylinder 13 at this time is low, and the rotational speed of the turbine impeller of the turbocharger is low, so that the boost pressure of intake air due to the turbocharger is low. Therefore, the exhaust gas in the exhaust manifold flows into the cylinder 13 of the engine 12 after passing through the EGR pipe and the intake manifold. On the other hand, although the master cylinder 63 is pushed up by the intake rocker arm 30 at the time of intake stroke of the cylinder 13, the solenoid valve 73 is turned off, and the movable case 72b in the first large-diameter passage 72a is kept in the lowered state, so that the oil in the oil passage 64 pushed up by the master piston 63 is discharged through the first oil discharge port 72f. Therefore, the slave piston 66 does not lower, and therefore one exhaust valve 26 is kept in the closed state. As a result, the highest combustion temperature of the air-fuel mixture in the cylinder 13 is decreased by the heat capacity that the exhaust gas, which is returned into the cylinder 13 by the external EGR device 21, has and by the decrease in oxygen concentration in intake air, so that the emission of NOx can be reduced. The reason why the solenoid valve 73 of the internal EGR device 62 is turned off when the engine 12 is operated at low to medium loads is that the quantity of exhaust gas returned to the intake manifold by the external EGR device 21 only can sufficiently meet the requirement.

Also, when the engine 12 is operated at medium to normal high loads, and the temperature sensor 45 detects a temperature not higher than the predetermined value, the controller 46 takes in the detection outputs of the rotation sensor 43 and the load sensor 44, and compares them with the map stored in the memory 47 to regulate the opening degree of the EGR valve 21b to a predetermined opening degree (for example, 5 to 100% of full open) and to turns the solenoid valve 73 on. When the solenoid valve 73 is turned on, the oil sent under pressure by the oil pump pushes up the movable case 72b, and thereafter is supplied into the oil passage 64 after passing through the hole 72e and the branch passage 70, and the movable case 72b is kept in the raised state. Although the oil pressure due to the oil pump acts on the slave piston 66 at this time, the force for pushing down the piston 18 of the engine 12 caused by this oil pressure is lower than the elastic force of the slave spring 74, so that the slave piston 66 does not lower. When the piston 18 of the engine 12 begins to be lowered by the transfer of stroke of the cylinder 13 to the intake stroke, the intake rocker arm 30 pushes up the master piston 63 to increase the oil pressure in the oil passage 64, so that the slave piston 66 is pushed down by this oil pressure. As a result, one exhaust valve 26 is pushed down by the slave rod 75, and thereby the exhaust port 16 is opened, so that exhaust gas flows into the cylinder 13. Therefore, the highest combustion temperature of the air-fuel mixture in the cylinder 13 is decreased by the heat capacity that the exhaust gas, which is returned into the cylinder 13 by the external EGR device 21 and the internal EGR device 62, has and by the decrease in oxygen concentration in intake air, so that the emission of NOx can be reduced.

Further, when a high-load operation harsh to the engine 12 such as hill climbing for a long period of time is performed, and the temperature sensor 45 detects a temperature exceeding the predetermined value, the controller 46 closes the EGR valve 21b regardless of the detection outputs of the rotation sensor 43 and the load sensor 44. Here, the EGR valve 21b is closed at the time of harsh high-load operation for the following two reasons. The first reason is as described below. When the engine 12 is operated at harsh high loads, the flow rate of exhaust gas discharged from the cylinder 13 to the exhaust pipe is very high, and the rotational speed of the turbine impeller of the turbocharger is also very high, so that the boost pressure of intake air due to the turbocharger becomes very high. Therefore, the difference between the exhaust gas pressure in the exhaust manifold and the intake air pressure in the intake manifold becomes small, so that even if the EGR valve 21b is opened, the quantity of exhaust gas in the exhaust manifold, which flows into the intake manifold through the EGR pipe 21a, is small. The second reason is as described below. Although the temperature of cooling water is raised by the harsh high-load operation of the engine 12, and the quantity of exhaust gas returned to the intake manifold is small, the cooling water is heat-exchanged with the exhaust gas in the EGR cooler, and thereby the temperature of cooling water is further raised, by which the engine 12 is overheated. On the other hand, even if the EGR valve 21b is closed, one exhaust valve 26 is pushed down by the slave rod 75 to open the exhaust port 16, so that the exhaust gas flows into the cylinder 13. As a result, the highest combustion temperature of the air-fuel mixture in the cylinder 13 is decreased by the heat capacity that the exhaust gas, which is returned into the cylinder 13 by the internal EGR device 62, has and by the decrease in oxygen concentration in intake air, so that the emission of NOx can be reduced though the NOx decreasing efficiency lowers slightly. Also, as compared with the case where NOx is decreased by increasing the EGR rate using the external EGR device 21 only, by using the external EGR device 21 and the internal EGR device 62 in combination, the fuel consumption can also be reduced in addition to the decrease in NOx.

In the above-described first and second embodiments, a turbosupercharged engine has been cited as the engine. However, a naturally-aspirated diesel engine, a turbosupercharged gasoline engine, and a naturally-aspirated gasoline engine can also be cited.

Also, in the above-described first and second embodiments, the electrically operated valve is used as the EGR valve. However, an air-driven valve or valves of other types may also be used.

Further, in the above-described first and second embodiments, the downstream end of the EGR pipe is connected to the intake manifold on the high pressure side of the intake passage, that is, on the intake air downstream side of a compressor. However, the downstream end of the EGR pipe may be connected to the intake pipe on the low pressure side of the intake passage, that is, on the intake air upstream side of the compressor.

### Examples

Next, an example of the present invention is explained in detail together with comparative examples.

### Example 1

As shown in Figures 1 and 2, the diesel engine 12 having the variable displacement turbocharger 11 of about 11 liters that is provided with the external EGR device 21 and the internal EGR device 22 was used as example 1. The external EGR device 21 has the EGR pipe 21a one end of which is connected to the exhaust manifold 17a and the other end of which is connected to the intake manifold 15a, and the EGR valve 21b that is provided in the EGR pipe 21a to open and close the EGR pipe 21a (Figure 1). Also, the internal EGR device 22 is the EGR protrusion 23a formed on the outer peripheral surface of the exhaust cam 23 for opening the exhaust valves 26 and 27 of the cylinder 13 (Figure 2). On the other hand, the EGR cooler 21c in which the cooling water of the engine 12 is used as a refrigerant was provided in the EGR pipe 21a. Also, on the engine 12, the rotation sensor 43 for detecting the rotational speed of the engine 12 and the load sensor 44 for detecting the load of the engine 12 were provided. On the radiator (not shown), the temperature sensor 45 for detecting the temperature of cooling water of the engine 12 was provided. The detection outputs of the rotation sensor 43, the load sensor 44, and the temperature sensor 45 were connected to the control inputs of the controller 46, and the control output of the controller 46 was connected to the EGR valve 21b of the external EGR device 21. The controller 46 was provided with the memory 47. In this memory 47, the engine rotational speed and the engine load for regulating the opening degree of the EGR valve 21b were stored as a map, and also the temperature (95°C) of cooling water of the engine 12 at the time when the opening and closing of the EGR valve 21b were changed over was stored.

### Comparative example 1

A diesel engine having a fixed displacement turbocharger of about 11 liters that is not provided with the external EGR device and the internal EGR device of example 1 was used as comparative example 1.

### Comparative example 2

A diesel engine having a fixed displacement turbocharger of about 11 liters that is not provided with the internal EGR device of example 1 though being provided with the external EGR device of example 1 was used as comparative example 2.

Also, on the engine, the rotation sensor for detecting the rotational speed of the engine and the load sensor for detecting the load of the engine were provided. The detection outputs of the rotation sensor and the load sensor were connected to the control inputs of the controller, and the control output of the controller was connected to the EGR valve of the external EGR device. The controller was provided with the memory. In this memory, the engine rotational speed and the engine load for regulating the opening degree of the EGR valve were stored as a map.

### Comparison test 1 and evaluation

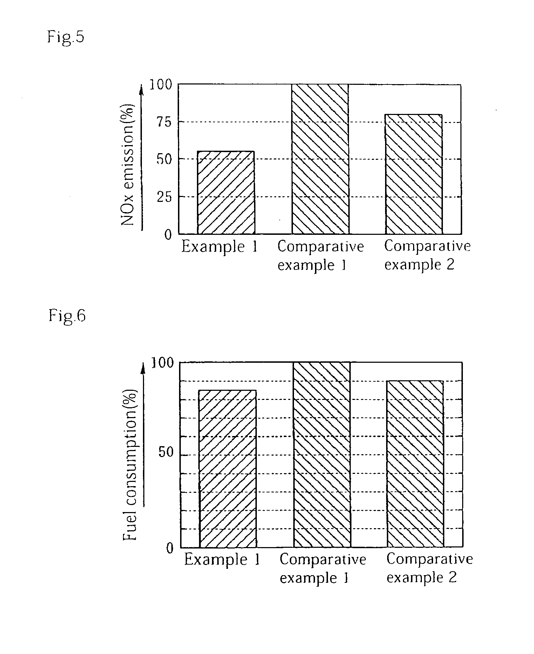

The engines of example 1, comparative example 1, and comparative example 2 were operated in the JE05 mode (the actual running mode reproducing in-city running applied from October in 2005), and NOx emission and fuel consumption were measured. The measurement results are given in Figures 5 and 6. In Figures 5 and 6, the NOx emission and the fuel consumption were represented with those in comparative example 1 being the standard (100%).

As is apparent from Figure 5, in example 1, the NOx emission could be reduced by 40% as compared with comparative example 1, and reduced by 20% as compared with comparative example 2. Also, as is apparent from Figure 6, in example 1, the fuel consumption could be reduced by 15% as compared with comparative example 1, and reduced by 5% as compared with comparative example 2.

### Industrial Applicability

The present invention can be applied to an exhaust gas recirculation device for an engine, which is capable of reducing the emission of NOx and preventing engine overheat when an engine is operated at low to normal high loads.

## Claims

1. An exhaust gas recirculation device for an engine, comprising:
an intake passage (15) which is connected to an intake port (14) of an engine (12) to supply air to a cylinder (13) of the engine (12);
an exhaust passage (17) which is connected to an exhaust port (16) of the cylinder (13) to discharge exhaust gas in the cylinder (13) into the atmosphere;
an external EGR device (21) which regulates the flow rate of exhaust gas returned to the intake passage (15) from the exhaust passage (17) through an EGR passage (21a), one end of which is connected to the exhaust passage (17) and the other end of which is connected to the intake passage (15), by providing an EGR valve (21b) for opening and closing the EGR passage (21a) in the EGR passage (21a);
an internal EGR device (22, 62) which introduces exhaust gas from the exhaust passage (17) into the cylinder (13) by opening an exhaust valve (26, 27) for opening and closing the exhaust port (16) at the time of intake stroke of the cylinder (13);
an EGR cooler (21c) which is provided in the EGR passage (21a) to cool exhaust gas flowing in the EGR passage (21a) by using cooling water of the engine (12);
a temperature sensor (45) for detecting the temperature of cooling water of the engine (12); and
a controller (46) for controlling the external EGR device (21) or the external EGR device (21) and the internal EGR device (22, 62) based on the detection output of the temperature sensor (45).

2. The exhaust gas recirculation device for an engine according to claim 1, wherein
the internal EGR device (22) is an EGR protrusion (23a) formed at a position, at which the exhaust valve (26, 27) is opened at the time of intake stroke of the cylinder (13), on the outer peripheral surface of an exhaust cam (23); and
the controller (46) carries out control so that when the temperature of cooling water detected by the temperature sensor (45) is not higher than a predetermined temperature, the external EGR device (21) is controlled to open the EGR valve (21b), and when the temperature of cooling water exceeds the predetermined temperature, the external EGR device (21) is controlled to close the EGR valve (21b).

3. The exhaust gas recirculation device for an engine according to claim 1, wherein
the internal EGR device (62) has a master piston (63) which is operated by an intake rocker arm (30) for opening an intake valve (24, 25) at the time of intake stroke of the cylinder (13), a slave piston (66) which is connected to the master piston (63) via an oil passage (64) and opens the exhaust valve (26, 27) of the cylinder (13) by means of oil pressure produced by the operation of the master piston (63), and an oil pressure changeover means (67) for changing over the holding and releasing of oil pressure in the oil passage (64), and
the controller (46) carries out control so that when the temperature of cooling water detected by the temperature sensor (45) is not higher than a predetermined temperature, the external EGR device (21) is controlled to open the EGR valve (21b), and the internal EGR device (62) is controlled to open or close the exhaust port (16) at the time of intake stroke of the cylinder (13); and when the temperature of cooling water exceeds the predetermined temperature, the external EGR device (21) is controlled to close the EGR valve (21b), and the internal EGR device (62) is controlled to open the exhaust port (16) at the time of intake stroke of the cylinder (13).
